# EUROPÄISCHE PATENTSCHRIFT

(11) **EP 0 481 450 B1**
(45) Veröffentlichungstag und Bekanntmachung des Hinweises auf die Patenterteilung: **09.11.1994**
(21) Anmeldenummer: 91117647.7
(22) Anmeldetag: 16.10.1991
(51) Int. Cl.: F01N 1/06, G10K 11/16

(54) **Schalldämpferanlage für Verbrennungsmotoren**
Silencer arrangement for internal combustion engines
Dispositif de silencieux pour moteur à combustion interne

(30) Priorität: 19.10.1990 DE 4033269
(43) Veröffentlichungstag der Anmeldung: 22.04.1992
(73) Patentinhaber: HEINRICH GILLET GmbH & CO. KG, D-67477 Edenkoben (DE)
(72) Erfinder: Weltens, Herman, Dr.-Ing., W-6748 Offenbach (DE); Krause, Peter, Dipl.-Ing., W-6741 Hochstadt (DE)
(74) Vertreter: Patentanwälte Möll und Bitterich

(56) Entgegenhaltungen:
- WO-A-89/07701
- PATENT ABSTRACTS OF JAPAN vol. 14, no. 42 (M-925)(3985) 25. Januar 1990 & JP-A-01 273 816 (AGENCY OF IND. SCIENCE & TECH.) 1. November 1989
- "Aktive Kontrolle einfacher, selbsterregter Resonatoren", von M. Möser, ACUSTICA, Vol. 69 1989, pp. 175-184
- PATENT ABSTRACTS OF JAPAN vol. 9, no. 142 (M-388)(1865) 18. Juni 1985 & JP-A-60 022 010 (NISSAN) 4. Februar 1985
- PATENT ABSTRACTS OF JAPAN vol. 9, no. 70 (M-367)(1793) 30. März 1985 & JP-A-59 201 915 (HINO) 15. November 1984
- PATENT ABSTRACTS OF JAPAN vol. 13, no. 223 (M-829) 24. Mai 1989 & JP-A-01 036 911 (SANKEI) 7. Februar 1989

## Beschreibung

Die Erfindung betrifft Schalldämpferanlagen für Verbrennungsmotoren gemäß dem Oberbegriff des Anspruchs 1.

Herkömmliche Abgasanlagen von Kraftfahrzeugen mit Verbrennungsmotoren besitzen meist mehrere Schalldämpfer - Vor-, Haupt- und/oder Nachschalldämpfer - , die untereinander und mit dem Motor über eine oder mehrere Abgasleitungen verbunden sind. Aufgabe der Schalldämpfer ist es, die in den Abgasen des Verbrennungsmotors enthaltene akustische Energie auf ein für die Umgebung erträgliches Maß zu reduzieren, ohne dabei die Leistung des Motors mehr als unbedingt nötig zu reduzieren.

Derzeit werden in der Praxis ausschließlich passive Schalldämpfer eingesetzt. In diesen erfolgt die Schalldämpfung nach den Prinzipien der Absorption und der Reflexion. Zum Reflexionsprinzip gehören exakt dimensionierte Resonatoren, die nach den Prinzipien des Helmholtz-Resonators bzw. der Lambda-Viertel-Leitung wirken.

Der Bau herkömmlicher Schalldämpferanlagen stellt einen Kompromiß dar zwischen der Forderung des Gesetzgebers nach immer besserer Schalldämpfung einerseits und der Automobilindustrie nach immer kleineren Abmessungen und Gewichten andererseits. Die Gesetze der Physik verlangen, daß die Volumina der Schalldämpfer auf die zu beeinflussenden Frequenzen abgestimmt sind. Je tiefer die Frequenz, desto größer das Volumen. Verschärft wird dieser Effekt noch dadurch, daß die Schallgeschwindigkeit in den heißen Abgasen bis auf ca. 600 m/sec. ansteigt.

Bereits in den 30er Jahren des 20. Jahrhunderts war entdeckt worden, daß es grundsätzlich möglich ist, die Schallenergie in den Kraftfahrzeugabgasen mit Hilfe der Interferenz, d. h. durch Überlagerung der unerwünschten Schallwellen mit exakt spiegelverkehrten Schwingungsverläufen, zu reduzieren (US 2 043 416). Auf diesem Prinzip basierende Versuchsanlagen verwenden ein Mikrofon, welches den Schall der Abgase mißt. In einem Mikroprozessor wird das Geräusch analysiert, verstärkt und um 180 Grad phasenverschoben. Mit diesem künstlichen Geräusch werden zwei Lautsprecher angeregt, die in einer das Abgasrohr umschließenden Kammer sitzen. Am Rohrende treffen die Schallwellen mit exakt 180 Grad Phasenverschiebung aufeinander und löschen sich weitgehend aus (WO 89/07701 A1).

Ein Vorteil dieser aktiven Schalldämpfer ist eine deutliche Verringerung von Gewicht und Volumen sowie eine Verringerung der Motorleistungsverluste aufgrund der Reduzierung des Abgasgegendrucks. Problematisch sind jedoch die hohen akustischen Leistungen, die von den Lautsprechern erzeugt werden müssen. Immerhin liegt die Intensität der ungedämpfen Abgasgeräusche bei 160 - 170 dB. Kein Lautsprecher kann diese Schallpegel erzeugen. Auch sind die Lausprecher durch die Abgaspulsationen und -temperaturen stark belastet.

In der Zeitschrift "ACUSTICA" 1989, S. 175 ist beschrieben, daß es mit Hilfe einer elektromechanischen Rückkopplungskompensation möglich ist, einen durch Gasströmung angeregten Helmholtz-Resonator so zu beeinflussen, daß darin selbsterzeugte akustische Schwingungen nicht oder nur sehr schwach entstehen können. Die hierzu verwendete Schaltungsanordnung besteht aus einem Mikrofon, welches die Schallereignisse im Helmholtz-Resonator aufnimmt, einem Meßverstärker, einem einstellbaren Phasenschieber und einem Leistungsverstärker, der einen akustisch an den Helmholtz-Resonator angekoppelten Lautsprecher speist. Der akustische Pegel des durch die Strömung generierten Geräusches konnte im Labor um bis zu 40 dB abgesenkt werden.

In den Konferenzpapieren der "Internoise 90" findet sich ab Seite 1305 ein Aufsatz "SEMI-ACTIVE NOISE CONTROL BY A RESONATOR WITH VARIABLE PARAMETERS", welcher auf Arbeiten am Department of Precision Mechanics, Kyoto University, basiert. Die verwendete Versuchsanlage besteht aus einem Abgasrohr, an das über ein Koppelrohr ein Helmholtz-Resonator angekoppelt ist. Den Boden des Helmholtz-Resonators bildet ein Kolben, der mittels Schrittmotor mechanisch verstellbar ist. Mikrofone in der Abgasleitung und im Helmholtz-Resonator nehmen die Schallereignisse auf, die in einem Personal Computer verarbeitet werden und den Schrittmotor so steuern, daß über die Verschiebung des Kolbens die Resonanzfrequenz des Helmholtz-Resonators wunschgemäß eingesteuert wird. Der Helmholtz-Resonator selbst wird lediglich durch die Abgase akustisch angeregt.

Auch mit diesen Experimentalsystemen konnten bei statischen Verhältnissen gute Kompensationswerte erzielt werden. Für hochdynamische Anwendungsfälle, wie sie bei Schalldämpferanlagen für Verbrennungsmotoren in Kraftfahrzeugen im praktischen Betrieb gegeben sind, ist jedoch auch dieses System noch völlig ungeeignet.

Der vorliegenden Erfindung liegt die Aufgabe zugrunde, eine Schalldämpferanlage der eingangs genannten Art anzugeben, mit der es möglich ist, das Mündungsgeräusch jedenfalls in gewünschten Frequenzbereichen mit geringem Aufwand weiter zu reduzieren.

Diese Aufgabe wird gelöst durch eine Schalldämpferanlage der gattungsgemäßen Art mit den Merkmalen gemäß Kennzeichen des Anspruchs 1.

Die vorliegende Erfindung macht sich die Tatsache zunutze, daß die Schalldämpfung der herkömmlichen, passiven Schalldämpferanlagen schon recht gut ist und nur im tieffrequenten Bereich, vorzugsweise zwischen 40 und 200 Hz, weiter verbessert werden muß und daß sowohl die Quelle der Abgasgeräusche als auch die akustischen Eigenschaften der zu verbessernden Schalldämpferanlage bekannt bzw. mit einfachen Mitteln bestimmbar sind. Die akustischen Eigenschaften der Schalldämpferanlage selbst sind konstruktionsbedingt und können durch Messung ausreichend genau bestimmt werden. Die Quelle der Abgasgeräusche ist der Verbrennungsmotor, dessen akustische Eigenschaften ebenfalls durch Messung bestimmt werden können. Schließlich hat noch die Temperatur der Abgase einen wesentlichen Einfluß auf die akustischen Eigenschaften der Schalldämpferanlage, weil die Schallgeschwindigkeit zwischen ca. 330 m/sec. bei Umgebungstemperatur und ca. 600 m/sec. bei den höheren Abgastemperaturen variiert. Die Temperatur der Abgase korrelliert mit dem Lastzustand des Motors. Diese Zusammenhänge sind in der Fachwelt bekannt.

Da die wesentlichen Einflußfaktoren als bekannt vorausgesetzt werden können, verwendet die vorliegende Erfindung vorzugsweise eine Steuerung statt einer Regelung wie der Stand der Technik. Dadurch werden die Anforderungen an die Elektronik erheblich reduziert, die Elektronik arbeitet dadurch schneller und hochdynamische Vorgänge lassen sich besser beherrschen. Es sind aber auch gemischte Anlagen mit einer groben Vorsteuerung und einer feinen Ausregelung denkbar.

Dank der Ausnützung des Resonanzeffektes sind die benötigten elektrischen Leistungen gering, was noch wesentlich dadurch unterstützt wird, daß die gesteuerten Resonanzelemente nur eine Geräuschreduzierung zwischen 10 und 20 dB bewirken müssen, da der wesentliche Teil der Geräuschdämpfung, insbesondere im Bereich der hohen Frequenzen, von den in herkömmlicher Technik gebauten passiven Schalldämpfern geleistet wird.

Vorzugsweise ist zur Temperaturmessung ein Temperatursensor in die Abgasleitung eingesetzt. Die Abgastemperatur kann jedoch auch indirekt über den Lastzustand des Motors und dieser z. B. durch die Stellung der Drosselklappe oder den Unterdruck in der Ansaugleitung bestimmt werden. In diesem Fall ist vorzugsweise ein Drosselklappen-Positionssensor oder ein Unterdrucksensor vorgesehen. Diese Sensoren sind keinen thermischen Belastungen unterworfen und sind bei Kraftstoffeinspritzsystemen bereits vorhanden.

Für den Fall, daß der Steuerkreis zu einem Regelkreis erweitert werden soll, kann wie an sich bekannt ein Drucksensor, insbesondere ein Mikrofon, in die Abgasleitung eingesetzt werden.

Gemäß einer bevorzugten Ausgestaltung der Erfindung ist der Helmholtz-Resonator als Druck- oder Saugresonator an die Abgasleitung angekoppelt. Diese beiden Varianten haben den Vorteil, daß die Abgasströmung an der Ankoppelstelle wenig Wirbel erzeugt, wodurch entsprechend wenig Zusatzgeräusche entstehen.

Gemäß einer vorteilhaften Ausgestaltung der Erfindung ist der Lautsprecher rückseitig mit Hilfe eines akustisch steifen Gehäuses, dessen Innenseite gegebenenfalls mit schallabsorbierendem Material gefüllt ist, von der Umgebung entkoppelt. Dadurch wird mit einfachen Mitteln eine unerwünschte Abstrahlung des vom Lautsprecher erzeugten Anti-Schalls in die Umgebung verhindert, wobei das schallabsorbierende Material die Entstehung unerwünschter zusätzlicher Resonanzen verhindert.

Besonders vorteilhaft ist es jedoch, wenn der Lautsprecher selbst im Inneren des Helmholtz-Resonators positioniert wird, und zwar insbesondere möglichst nahe an der Wand des Resonators, in der das Koppelrohr mündet. Bei dieser Variante übernimmt der Helmholtz-Resonator selbst die Aufgabe, die unerwünschte Abstrahlung des Anti-Schalls an die Umgebung zu verhindern, so daß auf gesonderte Abschirmmaßnahmen verzichtet werden kann.

Grundsätzlich kann der Helmholtz-Resonator an jeder beliebigen Stelle an die Abgasleitung angekoppelt werden, beispielsweise direkt hinter dem Motor, zwischen zwei passiven Schalldämpfern oder auch hinter dem letzten passiven Schalldämpfer. Der schalldämpfende Effekt ist am größten, wenn der Helmholtz-Resonator direkt hinter dem Motor angekoppelt wird; diese Variante erfordert jedoch extrem hohe Anti-Schalleistungen, da der Schallpegel der Abgase hier bis 170 dB erreicht.

Die geringste Anti-Schalleistung ist erforderlich, wenn der Helmholtz-Resonator am Ende der Abgasleitung angekoppelt wird, dort wo die Abgasleitung ins Freie mündet. Hier kann der bekannte physikalische Effekt ausgenützt werden, daß der Schallpegel beim Austritt aus dem Mündungsrohr durch den Impedanzsprung um 20 dB abgesenkt wird.

Für die Ankopplung des Helmholtz-Resonators an die Mündung der Abgasleitung gibt es zwei Möglichkeiten; entweder läßt man das Ende des Koppelrohrs unmittelbar neben dem Ende der Abgasleitung enden oder man sieht eine ausgangsseitig offene Mündungskammer vor, die das Ende der Abgasleitung umfaßt und in die das Koppelrohr mündet.

Gemäß einer bevorzugten Ausgestaltung der Erfindung bestehen Helmholtz-Resonator und/oder Koppelrohr wenigstens teilweise aus Kunststoff. Dies gilt insbesondere für die von der abgasführenden Leitung weiter entfernten Resonatorteile. Diese sind nicht vom Abgas durchströmt und werden deshalb praktisch nicht aufgeheizt.

Auch kann der Resonator abgesetzt von Abgasleitung und/oder Schalldämpfern im Kraftfahrzeug untergebracht werden. Geeignet wären nicht anderweitig genutzte Hohlräume im Fahrzeug, wobei dank des Kunststoffmaterials beliebige geometrische Formen zur optimalen Raumausnutzung hergestellt werden können.

Die räumlich-konstruktive Ankopplung des Aktuators an den Resonator muß auf die akustischen und räumlichen Gegebenheiten Rücksicht nehmen. Eine mögliche Ankopplung besteht in der Verwendung eines nach außen sich erweiternden konischen Rohres, insbesondere eines Exponentialrohres.

Falls Sensoren - Temperatur- und/oder Drucksensoren - in die Abgasleitung eingesetzt werden, empfiehlt es sich, diese stromaufwärts des Resonators zu positionieren.

Um trotz der relativ einfachen Steuerung mit ausreichender Genauigkeit arbeiten zu können, sind gemäß einer bevorzugten Ausgestaltung der Erfindung in der Controll-Box der Elektronik die akustischen Daten der Schalldämpferanlage und/oder des Motors gespeichert.

Anhand der Zeichnungen soll die Erfindung in Form von Ausführungsbeispielen näher erläutert werden. Es zeigen
- Fig. 1: eine Schalldämpferanlage nach der Erfindung,
- Fig. 2: eine schematische Darstellung einer Zweirohr-Schalldämpferanlage mit einer besonderen Resonator-Ankopplung,
- Fig. 3: eine schematische Darstellung einer Zweirohr-Schalldämpferanlage mit einem Mischrohr,
- Fig. 4: eine erste Möglichkeit zur Ankopplung eines Helmholtz-Resonators an das Ende der Abgasleitung,
- Fig. 5: eine Draufsicht auf das Mündungsende der Abgasanlage nach Fig. 4,
- Fig. 6: eine zweite Variante der Ankopplung eines Helmholtz-Resonators an das Mündungsende einer Abgasanlage,
- Fig. 7: eine Draufsicht auf das Ende der Abgasanlage der Fig. 6 in einer ersten Variante,
- Fig. 8: eine Draufsicht auf das Ende der Abgasanlage der Fig. 6 in einer zweiten Variante und
- Fig. 9: eine schematische Darstellung eines Steuerkreises zur amplituden-, phasen- und frequenzgerechten Erregung des Resonators.

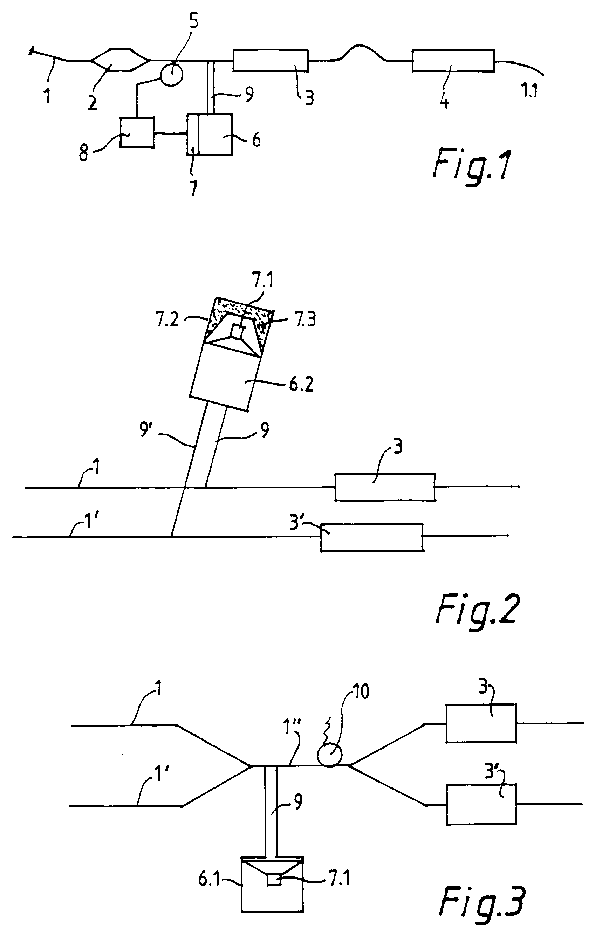

Fig. 1 zeigt schematisch eine Schalldämpferanlage, bestehend aus einem Abgasrohr 1, welches Vorschalldämpfer 2, Hauptschalldämpfer 3 und Nachschalldämpfer 4 untereinander und mit einem in der Zeichnung nicht dargestellten Verbrennungsmotor verbindet. Hinter dem Vorschalldämpfer 2 ist ein Sensor 5, beispielsweise ein Drucksensor, ein Mikrofon oder ein Temperatursensor, an die Leitung 1 angekoppelt. Die vom Sensor 5 aufgenommenen Signale werden an eine Elektronik 8 geleitet, mit den gegebenenfalls in der sogenannten Controll-Box gespeicherten Daten verglichen, verarbeitet und einem Lautsprecher 7 zugeführt. Dieser ist an einen Helmholtz- Resonator 6 angekoppelt, welcher seinerseits mittels eines Koppelrohrs 9 an die Abgasleitung 1 angekoppelt ist.

Mit Hilfe des vom Lautsprecher 7 erzeugten Schallsignals ist es möglich, Resonanzfrequenz, Resonanzüberhöhung und Resonanzbereich des Resonators 6 so zu steuern, daß die Schalleistung an der Mündung des Koppelrohrs 9 in die Abgasleitung 1 in dem von dem Resonator 6 erfaßten Frequenzbereich durch Interferenz reduziert wird. Die hohen Frequenzen werden nach wie vor von den in herkömmlicher Technik gefertigten Schalldämpfertöpfen 2, 3, 4 gedämpft.

Fig. 2 zeigt die Verwendung eines Helmholtz-Resonators 6.2 als Resonanzelement, hier in einer Zweirohr-Schalldämpferanlage. Der elektrodynamische Lautsprecher 7.1 ist direkt an den Helmholtz-Resonator 6.2 angekoppelt. Auf diese Weise können Resonanzfrequenz, -überhöhung und -bereich des Helmholtz-Resonators 6.2 innerhalb der konstruktiv vorgegebenen Grenzen aktiv beeinflußt werden.

Der Lautsprecher 7.1 sitzt dabei in einem akustisch steifen Gehäuse 7.2, dessen Innenseite gegebenenfalls mit schallabsorbierendem Material 7.3 ausgekleidet ist. Auf diese Weise wird verhindert, daß der vom Lautsprecher 7.1 erzeugte Anti-Schall in die Umgebung gelangt und daß das Gehäuse 7.2 ebenfalls zusätzliche störende Resonanzen erzeugt.

Bei der dargestellten Zweirohr-Schalldämpferanlage mit zwei völlig getrennten Abgasleitungen 1, 1' mit herkömmlichen passiven Schalldämpfertöpfen 3, 3' ist der Helmholtz-Resonator 6.2 über je ein Koppelrohr 9, 9' an die beiden Abgasleitungen 1, 1' angekoppelt. Um Ausgleichsströmungen zwischen den beiden Abgasleitungen 1, 1' über den gemeinsamen Resonator 6.2 zu verhindern, können in diesem geeignete Strömungssperrmittel eingebaut sein, die jedoch die Anregung von akustischen Schwingungen durch den Lautsprecher 7.1 und deren übertragung über die Koppelrohre 9, 9' nicht behindern dürfen.

Die Fig. 3 zeigt ein weiteres Ausführungsbeispiel einer Zweirohr-Schalldämpferanlage, wie sie beispielsweise für Sechszylinder-Motoren verwendet wird. Eine Besonderheit dieser Anlage ist darin zu sehen, daß die beiden Abgasleitungen 1, 1' eine gemeinsame Mischstrecke 1'' aufweisen, in der beispielsweise eine zur Steuerung des Motors benötige Lambda-Sonde 10 sitzt. An diese gemeinsame Mischstrecke 1'' ist nun über das Koppelrohr 9 auch der Helmholtz-Resonator 6.1 mit Lautsprecher 7.1 angekoppelt.

Fig. 3 zeigt als weitere Besonderheit, daß es möglich ist, den Lautsprecher 7.1 im Inneren des Helmholtz-Resonators 6.1 zu positionieren, und zwar vorzugsweise so, daß die Lautsprechermembran möglichst nahe an der Wand positioniert wird, in der das Koppelrohr 9 mündet. Falls die Membran des Lautsprechers 7.1 wie üblich konisch ausgebildet ist, empfiehlt es sich, die entsprechende Resonatorwand ebenfalls konisch zu gestalten. Bei einer derartigen Abordnung des Lautsprechers 7.1 entfällt die Notwendigkeit, ein eigenes akustisches Abschirmgehäuse 7.2 zu verwenden.

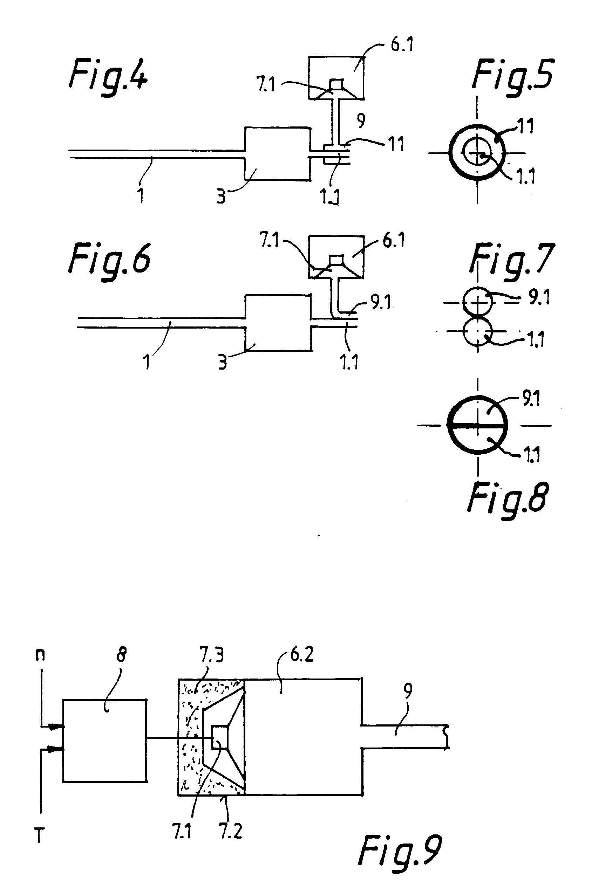

Fig. 4 zeigt schematisch eine erste Variante zur Ankopplung des Helmholtz-Resonators 6.1 am Mündungsende 1.1 der Abgasleitung 1. Um das Mündungsende 1.1 herumgelegt ist eine ausgangsseitig offene Mündungskammer 11, in die das Koppelrohr 9 mündet.

Fig. 5 zeigt als Draufsicht, wie die Mündungskammer 11 die Mündung 1.1 der Abgasleitung 1 allseitig symmetrisch umschließt. Diese Anordnung bildet einen akustischen Quadrupol.

Fig. 6 zeigt schematisch eine weitere Variante der Ankopplung. Hier endet das Ende 9.1 des Koppelrohrs 9 unmittelbar neben dem Mündungsende 1.1 der Abgasleitung 1.

Fig. 7 zeigt als Draufsicht eine erste Anordnung der beiden Rohrmündungen 1.1, 9.1. Diese Anordnung bildet einen akustischen Dipol.

Fig. 8 zeigt als Draufsicht eine zweite Anordnung der beiden Rohrmündungen 1.1, 9.1. Beide sind zu einem Doppel-D-Rohr kombiniert.

Fig. 9 zeigt schematisch einen Steuerkreis zur Verwendung in der erfindungsgemäßen Schalldämpferanlage. Der Elektronik 8 werden die aktuellen Werte für Motordrehzahl n und Abgastemperatur T zugeführt. In der Controll-Box der Elektronik 8 sind die akustischen Daten der Schalldämpferanlage und/oder des Motors in geeigneter Form gespeichert, beispielsweise als digitale Tabelle. Ein Drehzahlmesser ist in jedem Kraftfahrzeug vorhanden. Die Abgastemperatur kann entweder direkt über einen Temperatursensor gemessen oder indirekt über die Stellung der Drosselklappe, den Unterdruck im Ansaugrohr oder den Abgasgegendruck bestimmt werden. Die letzteren Varianten haben den Vorteil, daß der Sensor nicht von heißen Abgasen beaufschlagt wird.

Es versteht sich, daß zur Beeinflussung eines breiten Frequenzbereiches auch mehrere Resonatoren 6 an die Abgasleitung 1 angekoppelt werden können. In allen Fällen ist die zur Erregung des Lautsprechers 7 erforderliche Leistung dank des Resonanzprinzips relativ gering. Die Resonatoren 6 selbst können in den meisten Fällen abgesetzt von der in herkömmlicher Technik gefertigten Schalldämpferanlage an geeigneten Stellen - in ungenutzten Hohlräumen - im Kraftfahrzeug untergebracht und zudem aus leichten Kunststoffmaterialien in fast beliebigen Formen gefertigt werden.

## Patentansprüche

1. Schalldämpferanlage für Verbrennungsmotoren, umfassend eine Abgasleitung (1, 1', 1.1 ), eine Elektronik (8) zum Erfassen von Motordaten einen über ein Koppelrohr (9) akustisch an die Abgasleitung (1, 1', 1.1) angekoppenlten Resonator (6) und einen Aktuator (7), der mittels der Elektronik (8) frequenz-, phasen- und amplitudenkontrolliert gespeist wird, wobei der Aktuator (7) ein Lautsprecher (7.1) ist, der im Resonator (6) akustische Schwingungen anregt, gesteuert durch die Drehzahl (n) des Motors, dadurch gekennzeichnet, daß ein passiver Schalldämpfer (2, 3, 3', 4) vorgesehen ist, daß die akustischen Schwingungen zusätzlich durch die Zylinderzahl des Motors und die Temperatur (T) der Abgase angeregt sind und daß der Lautsprecher (7.1) von der Umgebung akustisch entkoppelt ist.

2. Schalldämpferanlage nach Anspruch 1, dadurch gekennzeichnet, daß zur Ermittlung der Abgastemperatur ein Temperatursensor (5) in der Abgasleitung (1), ein Drosselklappen-Positionssensor oder ein Unterdrucksensor in der Ansaugleitung vorgesehen ist.

3. Schalldämpferanlage nach Anspruch 1 oder 2, dadurch gekennzeichnet, daß ein Drucksensor (5), insbesondere ein Mikrofon, in der Abgasleitung (1) vorgesehen ist.

4. Schalldämpferanlage nach einem der Ansprüche 1 bis 3, dadurch gekennzeichnet, daß der Resonator (6. 1' 6.2) als Druck- oder Saugresonator angekoppelt ist.

5. Schalldämpferanlage nach einem der Ansprüche 1 bis 4, dadurch gekennzeichnet, daß der Lautsprecher (7.1) rückseitig mit Hilfe eines akustisch steifen Gehäuses (7.2), dessen Innenseite gegebenenfalls mit schallabsorbierendem Material (7.3) gefüllt ist, von der Umgebung entkoppelt ist.

6. Schalldämpferanlage nach einem der Ansprüche 1 bis 4, dadurch gekennzeichnet, daß der Lautsprecher (7.1) im Inneren des Resonators (6.1) positioniert ist.

7. Schalldämpferanlage nach Anspruch 6, dadurch gekennzeichnet, daß die Membran des Lautsprechers (7.1) möglichst nahe an der Wand des Resonators (6.1) positioniertist, in der das Koppelrohr (9) mündet.

8. Schalldämpferanlage nach einem der Ansprüche 1 bis 7, dadurch gekennzeichnet, daß das Ende (9.1) des Koppelrohrs (9) neben dem Ende (1.1) der Abgasleitung (1) positioniert ist.

9. Schalldämpferanlage nach einem der Ansprüche 1 bis 7, dadurch gekennzeichnet, daß eine ausgangsseitig offene Mündungskammer (11) das Ende (1.1) der Abgasleitung (1) umfaßt und daß das Koppelrohr (9) in diese Mündungskammer (11) mündet.

10. Schalldämpferanlage nach einem der Ansprüche 1 bis 9, dadurch gekennzeichnet, daß Resonator (6) und/oder Koppelrohr (9) wenigstens teilweise aus Kunststoff bestehen.

11. Schalldämpferanlage nach einem der Ansprüche 1 bis 10, dadurch gekennzeichnet, daß der Lautsprecher (7.1) über einen Exponentialtrichter (9.1) an den Resonator (6.1, 6.2) angekoppelt ist.

12. Schalldämpferanlage nach einem der Ansprüche 1 bis 11, dadurch gekennzeichnet, daß in der Elektronik (8) bzw. in deren Controll-Box die akustischen Daten der Schalldämpferanlage (1 - 9) und/oder des Motors gespeichert sind.

## Claims

1. A silencer installation for internal-combustion engines, comprising an exhaust pipe (1, 1', 1.1), an electronic unit (8) for receiving engine data, a resonator (6) coupled acoustically via a coupling tube (9) to the exhaust pipe (1, 1', 1.1), and an actuator (7) which by means of the electronic unit (8) is supplied with power in frequency-, phase-and amplitude-controlled manner, wherein the actuator (7) is a loudspeaker (7.1) which induces acoustic vibrations in the resonator (6) controlled by the speed of rotation (n) of the engine, characterised in that a passive silencer (2, 3, 3', 4) is provided, in that acoustic vibrations dependent on the number of cylinders in the engine and the temperature (T) of the exhaust gases are additionally induced, and in that the loudspeaker (7.1) is acoustically isolated from the environment.

2. A silencer installation according to Claim 1, characterised by the provision, for the purpose of determining the exhaust-gas temperature, of a temperature sensor (5) in the exhaust pipe (1), a throttle-flap position sensor or a depression sensor in the intake duct.

3. A silencer installation according to Claim 1 or 2, characterised in that a pressure sensor (5), in particular a microphone, is provided in the exhaust pipe (1).

4. A silencer installation according to any one of Claims 1 to 3, characterised in that the resonator (6.1, 6.2) is coupled as a pressure or suction resonator.

5. A silencer installation according to any one of Claims 1 to 4, characterised in that the loudspeaker (7.1) is isolated at the rear from the environment by means of an acoustically rigid housing (7.2), the inside of which is optionally filled with sound-absorbing material (7.3).

6. A silencer installation according to any one of Claims 1 to 4, characterised in that the loudspeaker (7.1) is situated inside the resonator (6.1).

7. A silencer installation according to Claim 6, characterised in that the diaphragm of the loudspeaker (7.1) is situated as near as possible to the wall of the resonator (6.1) into which the coupling tube (9) discharges.

8. A silencer installation according to any one of Claims 1 to 7, characterised in that the end (9.1) of the coupling tube (9) is situated near to the end (1.1) of the exhaust pipe (1).

9. A silencer installation according to any one of Claims 1 to 7, characterised in that an orifice chamber (11) open at the outlet side encloses the end (1.1) of the exhaust pipe (1), and in that the coupling tube (9) discharges into the orifice chamber (11).

10. A silencer installation according to any one of Claims 1 to 9, characterised in that the resonator (6) and/or the coupling tube (9) consists at least partly of plastics material.

11. A silencer installation according to any one of Claims 1 to 10, characterised in that the loudspeaker (7.1) is coupled with the resonator (6.1, 6.2) via an exponential horn (9.1).

12. A silencer installation according to any one of Claims 1 to 11, characterised in that the acoustic data of the silencer installation (1 - 9) and/or of the engine are stored in the electronic unit (8) and/or in its control box.

## Revendications

1. Dispositif de silencieux pour moteur à combustion interne, comprenant une conduite de gaz d'échappement (1, 1', 1.1), une électronique (8) pour appréhender des données moteur, un résonateur (6) couplé accoustiquement à la conduite de gaz d'échappement (1, 1', 1.1), par l'intermédiaire d'un tube de couplage (9), et un organe d'actionnement (7), alimenté, au moyen de l'électronique (8), de façon contrôlée en fréquence, phase et amplitude, l'organe d'actionnement (7) étant un haut-parleur (7.1) qui excite les pulsations acoustiques dans le résonateur (6), sous la commande de la vitesse de rotation (n) du moteur, caractérisé en ce qu'un silencieux (2, 3, 3', 4) passif est prévu, que les pulsations acoustiques sont excitées en outre par le nombre de cylindres du moteur et la température (T) des gaz d'échappement et que le haut-parleur (7.1) est découplé accoustiquement de l'environnement.

2. Dispositif de silencieux selon la revendication 1, caractérisé en ce qu'un capteur de température (5) est prévu dans la conduite de gaz d'échappement (1), pour déterminer la température des gaz d'échappement, et un capteur de position de clapet d'étranglement ou un capteur à dépression est prévu dans la conduite d'aspiration.

3. Dispositif de silencieux selon la revendication 1 ou 2, caractérisé en ce qu'un capteur de pression (5), en particulier un microphone, est prévu dans la conduite de gaz d'échappement (1).

4. Dispositif de silencieux selon l'une des revendications 1 à 3, caractérisé en ce que le résonateur (6.1, 6.2) est accouplé en tant que résonateur de pression ou d'aspiration.

5. Dispositif de silencieux selon l'une des revendications 1 à 4, caractérisé en ce que le haut-parleur (7.1) est découplé de l'entourage en face arrière, à l'aide d'un boîtier (7.2) accoustiquement rigide, dont la face intérieure est remplie, le cas échéant, d'un matériau (7.3) absorbant le bruit.

6. Dispositif de silencieux selon l'une des revendications 1 à 4, caractérisé en ce que le haut-parleur (7.1) est positionné à l'intérieur du résonateur (6.1).

7. Dispositif de silencieux selon la revendication 6, caractérisé en ce que la membrane du haut-parleur (7.1) est positionnée le plus près possible de la paroi du résonateur (6.1), dans laquelle débouche le tube de couplage (9).

8. Dispositif de silencieux selon l'une des revendications 1 à 7, caractérisé en ce que l'extrémité (9.1) du tube de couplage (9) est positionnée près de l'extrémité (1.1) de la conduite de gaz d'échappement (1).

9. Dispositif de silencieux selon l'une des revendications 1 à 7, caractérisé en ce qu'une chambre d'embouchure (11), ouverte côté sortie, entoure l'extrémité (1.1) de la conduite de gaz d'échappement (1) et en ce que le tube de couplage (9) débouche dans cette chambre d'embouchure (11).

10. Dispositif de silencieux selon l'une des revendications 1 à 9, caractérisé en ce que le résonateur (6) et/ou le tube de couplage (9) sont réalisés, au moins partiellement, en matière synthétique.

11. Dispositif de silencieux selon l'une des revendications 1 à 10, caractérisé en ce que le haut-parleur (7.1) est couplé au résonateur (6.1, 6.2) au moyen d'un pavillon-entonnoir à forme exponentielle (9.1).

12. Dispositif de silencieux selon l'une des revendications 1 à 11, caractérisé en ce que les données acoustiques du dispositif de silencieux (1 à 9) et/ou du moteur sont mémorisées dans l'électronique, ou dans sa boîte de commande/contrôle.
